# EUROPEAN PATENT SPECIFICATION

(11) **EP 2 700 900 B1**
(45) Date of publication and mention of the grant of the patent: **12.07.2017**
(21) Application number: 11864001.0
(22) Date of filing: 21.04.2011
(51) Int. Cl.: G01B 7/16, G01L 1/22, G01M 5/00

(54) **EXFOLIATION DETECTING DEVICE, SEMICONDUCTOR DEVICE, MECHANICAL QUANTITY MEASURING DEVICE AND MODULE**
TRENNDETEKTOR, HALBLEITERBAUELEMENT, MECHANISCHE QUANTITÄTSMESSVORRICHTUNG UND MODUL
DISPOSITIF DE DÉTECTION DE DÉTACHEMENT, DISPOSITIF SEMI-CONDUCTEUR, DISPOSITIF DE MESURE DE QUANTITÉS MÉCANIQUES ET MODULE

(43) Date of publication of application: 26.02.2014
(73) Proprietor: Hitachi, Ltd., Tokyo 100-8280 (JP)
(72) Inventor: OTA Hiroyuki, Chiyoda-ku Tokyo 100-8280 (JP); ASHIDA Kisho, Chiyoda-ku Tokyo 100-8280 (JP); MIYAJIMA Kentaro, Chiyoda-ku Tokyo 100-8280 (JP)
(74) Representative: MERH-IP Matias Erny Reichl Hoffmann Patentanwälte PartG mbB
(86) International application number: PCT/JP2011/059860
(87) International publication number: WO 2012/144054

(56) References cited:
- JP-A- 2007 263 781
- JP-A- 2007 305 763
- JP-A- 2010 205 889
- US-A1- 2006 207 339
- US-A1- 2007 228 500
- US-A1- 2008 034 882

## Description

### BACKGROUND OF THE INVENTION

### Technical Field

The present invention relates to a mechanical quantity measuring device, a semiconductor device, and an exfoliation detecting device, which detect exfoliation of the devices themselves, and a module equipped with these devices.

### Background Art

A mechanical quantity measuring device can be attached to a measured object and thus can indirectly measure a mechanical quantity acting on the measured object. As this mechanical quantity measuring device, a strain sensor chip is proposed, which utilizes an effect of resistance that varies depending on the strain (piezoresistive effect). An impurity diffused resistor is formed on a surface of this strain sensor chip (mechanical quantity measuring device) and the strain sensor chip (mechanical quantity measuring device) is attached to a measured object, with an adhesive. When a mechanical quantity acts on the measured object and the measured object is strained, the impurity diffused resistor is strained via the adhesive and the resistance thereof changes. Therefore, the mechanical quantity (strain) acting on the measured object can be detected.

Since the adhesive transmits the strain of the measured object to the impurity diffused resistor in the mechanical quantity measuring device, the adhesive itself is strained at the same time. Therefore, it is considered a case where the adhesive force weakens, causing the strain sensor chip (mechanical quantity measuring device) to be exfoliated from the measured object. As the strain sensor chip (mechanical quantity measuring device) is exfoliated, the strain of the measured object cannot be sufficiently transmitted to the strain sensor chip (mechanical quantity measuring device) and therefore accurate measurement cannot be done. Thus, in order to detect the exfoliation, it is proposed that impurity diffused resistors as exfoliation monitoring sensors are provided in the four corners of the strain sensor chip (mechanical quantity measuring device), in addition to the impurity diffused resistor for measuring the mechanical quantity acting on the measured object, and that these impurity diffused resistors in the four corners are connected to form a Wheatstone bridge, for example, in patent literature JP-2007-263781 A (see FIG. 20 in particular).

US 2006/0207339 A1 describes a mechanical-quantity measuring device capable of measuring a strain component of structure deformation for an object to be measured. A strain sensor is formed on a semiconductor substrate. Impurity-diffused layers considering the crystal orientation of the semiconductor single crystalline substrate are used to form a Wheatstone bridge circuit on the substrate.

US 2008/0034882 A1 describes a monitoring system for a valve device. A semiconductor single crystalline substrate is mounted to parts of valve device. Thrust and torque of the valve device are measured by the semiconductor single crystalline substrate and then the measured values are used for monitoring the valve device.

### SUMMARY OF THE INVENTION

### Technical Problems

Exfoliation occurs in any of the four corners of the strain sensor chip (mechanical quantity measuring device) and spreads toward the center. Therefore, it is desirable that the impurity diffused resistors as the exfoliation monitoring sensors are arranged in the four corners to detect exfoliations in an initial stage of the occurrence. However, it is considered that, in the conventional strain sensor chip (mechanical quantity measuring device), even when exfoliation occurs, in some cases, change in the sense output from the Wheatstone bridge is too small for the exfoliation to be detected. For example, if exfoliations occur simultaneously in the four or two corners, the resistance values of the impurity diffused resistors arranged in the corners where the exfoliations occur, may change simultaneously, and the changes in the electric potential in the Wheatstone bridges may offset each other, thereby the output changes in the sense outputs from the Wheatstone bridges cannot be detected, and the exfoliations cannot be detected. Thus, it is desirable that the strain sensor chip (mechanical quantity measuring device) can securely detect its own exfoliations.

Also, the Wheatstone bridges formed by connecting the impurity diffused resistors in the four corners have a large sectional area when regarded as a single coil. Therefore, it is considered that a noise tends to be generated by electromagnetic waves generated from the impurity diffused resistor for measuring the mechanical quantity acting on the measured object or by electromagnetic waves from outside the device, and thereby the exfoliation cannot be detected accurately. In this respect, too, it is desirable that the strain sensor chip (mechanical quantity measuring device) can securely detect its own exfoliation.

In addition, the mechanical quantity measuring device is attached to the measured object, and a semiconductor device is also attached to a module substrate in order to reduce electrical resistance and heat resistance. Thus, it is advantageous if the semiconductor device can detect its own exfoliation. Also, it is advantageous if there is an exfoliation detecting device which indirectly detects exfoliation of the mechanical quantity measuring device or the semiconductor device by detecting its own exfoliation. Then, a module equipped with the mechanical quantity measuring device, semiconductor device, or exfoliation detecting device is advantageous because the module can detect its own exfoliation and thus suggest exfoliation from the module substrate of another semiconductor device.

Thus, an object of the invention is to provide a mechanical quantity measuring device, a semiconductor device, and an exfoliation detecting device, capable of securely detecting exfoliation of the devices themselves, and a module equipped with these devices.

### Solution to Problems

The object that is described above is achieved by the invention according to claims 1 to 4. Further preferred developments are set forth in the dependent claims 4 to 15. According to an aspect, a mechanical quantity measuring device in which a measuring portion capable of measuring a mechanical quantity acting on a semiconductor substrate is provided at a central part of the semiconductor substrate and the semiconductor substrate is attached to a measured object so as to indirectly measure the mechanical quantity acting on the measured object, is characterized in that
the device has plural impurity diffused resistors forming a group gathering closely to each other in at least one place, on an outer peripheral part outside the central part of the semiconductor substrate, and
the plural impurity diffused resistors forming one of the groups are connected to each other and form a Wheatstone bridge.

Also, according to the invention, a semiconductor device in which an element or a circuit is provided at a central part of a semiconductor substrate is characterized in that
the device has plural impurity diffused resistors forming a group gathering closely to each other in at least one place, on an outer peripheral part outside the central part of the semiconductor substrate, and
the plural impurity diffused resistors forming one of the groups are connected to
each other and form a Wheatstone bridge.

Also, according to the invention defined in claim 1, an exfoliation detecting device is characterized in that the device has plural impurity diffused resistors forming a group gathering closely to each other in at least one place, on an outer peripheral part of a semiconductor substrate, and
the plural impurity diffused resistors forming one of the groups are connected to each other and form a Wheatstone bridge.

Moreover, according to the invention, a module in which a semiconductor device having an element or circuit provided on a semiconductor substrate is attached to a module substrate is characterized in that
the exfoliation detecting device is attached near the semiconductor device in the module substrate.

### Advantageous Effect of the Invention

According to the invention, a mechanical quantity measuring device, a semiconductor device, and an exfoliation detecting device capable of securely detecting exfoliation of the devices themselves, and a module equipped with these devices can be provided.

### BRIEF DESCRIPTION OF THE DRAWINGS

FIG. 1 is a plan view of a mechanical quantity measuring device, semiconductor device, or exfoliation detecting device according to a first embodiment of the invention.
FIG. 2 is a circuit diagram of a Wheatstone bridge formed in the mechanical quantity measuring device, semiconductor device, or exfoliation detecting device.
FIG. 3A is a schematic view showing how exfoliation proceeds at the mechanical quantity measuring device, semiconductor device, or exfoliation detecting device attached to a measured object.
FIG. 3B is a sectional view taken along arrows A-A in FIG. 3A.
FIG. 4 is a structural diagram of an exfoliation detection system including the mechanical quantity measuring device, semiconductor device, or exfoliation detecting device according to the first embodiment of the invention.
FIG. 5A is a flowchart of an exfoliation detection method carried out by the exfoliation detection system.
FIG. 5B is a flowchart of a method for acquiring peak time (bottom time) in step S1 in the exfoliation detection method.
FIG. 6 is a waveform of a sense output from the Wheatstone bridge ("bridge" in some figures) when the exfoliation detection method is carried out.
FIG. 7 is a plan view of a mechanical quantity measuring device, semiconductor device, or exfoliation detecting device according to a second embodiment of the invention.
FIG. 8 is a plan view of a mechanical quantity measuring device, semiconductor device, or exfoliation detecting device according to a third embodiment of the invention.
FIG. 9 is a plan view of a mechanical quantity measuring device, semiconductor device, or exfoliation detecting device according to a fourth embodiment of the invention.
FIG. 10 is a plan view of a mechanical quantity measuring device, semiconductor device, or exfoliation detecting device according to a fifth embodiment of the invention.
FIG. 11 is a plan view of a mechanical quantity measuring device, semiconductor device, or exfoliation detecting device according to a sixth embodiment of the invention.
FIG. 12 is a perspective view of a module according to a seventh embodiment of the invention, equipped with an exfoliation detecting device, mechanical quantity measuring device, or semiconductor device.

### DETAILED DESCRIPTION OF THE INVENTION

Next, embodiments of the invention will be described in detail, properly referring to the drawings. In the drawings, common parts are denoted by the same reference numerals and duplicate explanation is omitted. Also, the invention is not limited to each of the plural embodiments employed here and may be combined properly.

### (First Embodiment)

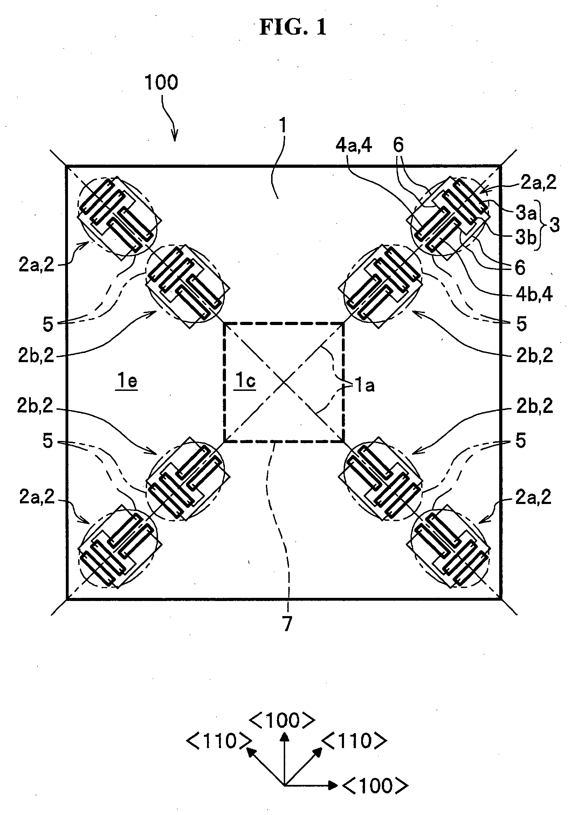

FIG. 1 shows a plan view of a mechanical quantity measuring device (semiconductor device, or exfoliation detecting device) 100 according to a first embodiment of the invention. The mechanical quantity measuring device (semiconductor device, or exfoliation detecting device) 100 has a semiconductor substrate 1 that is quadrilateral (rectangular, square) as viewed in the plan view. As the semiconductor substrate 1, a silicon single-crystal substrate with a (001) surface can be used. At a central part 1c of the semiconductor substrate 1 in the mechanical quantity measuring device (or semiconductor device, exfoliation detecting device) 100, a measuring portion (element, circuit, or space) 7 is provided. Depending on which of a measuring portion 7, element 7, circuit 7, and space 7 is provided in the central part 1 c of the semiconductor substrate 1, the main function varies and the name of the invention varies such as a mechanical quantity measuring device 100, semiconductor device 100, or exfoliation detecting device 100.

Specifically, at the central part 1c of the semiconductor substrate 1 in the mechanical quantity measuring device 100, provided is the measuring portion 7 capable of measuring a mechanical quantity acting on the semiconductor substrate 1. The semiconductor substrate 1 is attached to a measured object and a mechanical quantity acting on the measured object can be indirectly measured as a mechanical quantity acting on the semiconductor substrate 1.

Also, specifically, the element or circuit 7 is provided at the central part 1c of the semiconductor substrate 1 in the semiconductor device 100. The element or circuit 7 is connected to an external device and executes a predetermined function.

Moreover, specifically, at the central part 1c of the semiconductor substrate 1 in the exfoliation detecting device 100, an element or circuit need not necessarily be provided and simply the space 7 may be provided.

On an outer peripheral part 1 e outside the central part 1 c of the semiconductor substrate 1 in the mechanical quantity measuring device (or semiconductor device, exfoliation detecting device) 100, plural impurity diffused resistors 3, 4 are arranged. The conduction type of the impurity diffused resistors 3, 4 is p-type. The plural impurity diffused resistors 3, 4 form a group 5, gathering closely to each other in at least one place (for example, eight places in FIG. 1). In the group 5, four impurity diffused resistors 3, 4 gather. The group 5 includes a group of a first impurity diffused resistor 3a and a third impurity diffused resistor 3b of the impurity diffused resistors 3, and a second impurity diffused resistor 4a and a fourth impurity diffused resistor 4b of the impurity diffused resistors 4. The four impurity diffused resistors 3a, 3b, 4a, 4b forming one such group 5 are connected to each other via a wire 6 and form a Wheatstone bridge 2 (2a, 2b).

One end of the second impurity diffused resistor 4a is connected to one end of the first impurity diffused resistor 3a.

One end of the third impurity diffused resistor 3b is connected to the other end of the second impurity diffused resistor 4a.

One end of the fourth impurity diffused resistor 4b is connected to the other end of the third impurity diffused resistor 3b.

The other end of the first impurity diffused resistor 3a is connected to the other end of the fourth impurity diffused resistor 4b.

The first impurity diffused resistor 3a and the third impurity diffused resistor 3b are arranged on the outer side than the second impurity diffused resistor 4a and the fourth impurity diffused resistor 4b, within the surface of the semiconductor substrate 1.

The wire 6 is connected to the two ends in the longitudinal direction of each of the first impurity diffused resistor 3a, the second impurity diffused resistor 4a, the third impurity diffused resistor 3b, and the fourth impurity diffused resistor 4b, and an electric current can flow in this longitudinal direction.

The longitudinal direction of the first impurity diffused resistor 3a and the longitudinal direction of the third impurity diffused resistor 3b are substantially parallel. The two ends in the longitudinal direction of the first impurity diffused resistor 3a and the two ends in the longitudinal direction of the third impurity diffused resistor 3b are aligned with each other and closely to each other. The longitudinal direction of the first impurity diffused resistor 3a and the third impurity diffused resistor 3b intersects, substantially at right angles, radial directions of a circle about the center within the surface of the semiconductor substrate 1 (coinciding with the directions of diagonal lines 1a in the example of FIG. 1). By the way, for example, in FIG. 1, since the shape of the surface of the semiconductor substrate 1 is substantially square, the center within the surface of the semiconductor substrate 1 coincides with the point of intersection of the two diagonal lines 1 a. The longitudinal directions of the first impurity diffused resistor 3a and the third impurity diffused resistor 3b are in the direction of the crystal orientation <110> of the semiconductor substrate 1. Also, the sides of the quadrilateral of the surface of the semiconductor substrate 1 are substantially parallel to the crystal orientation <100> of the semiconductor substrate 1 or intersect it substantially at right angles. Also, each of the first impurity diffused resistor 3a and the third impurity diffused resistor 3b is in a shape of line symmetry about the diagonal line 1a.

In the explanation of the first embodiment and the subsequent explanation of other embodiments, a crystal surface and crystal orientation are designated in the semiconductor substrate 1, using a Miller index. Additionally, equivalent crystal surfaces or crystal orientations in the semiconductor substrate 1 are described with the same expression. Specifically, though the vertical sides and the horizontal sides of the quadrilateral of the surface of the semiconductor substrate 1 are in different directions, the crystal orientation which coincides with the direction of each side is the same crystal orientation <100> and both directions are equivalent in the crystal orientation.

The longitudinal direction of the second impurity diffused resistor 4a and the longitudinal direction of the fourth impurity diffused resistor 4b are substantially parallel to each other. The two ends in the longitudinal direction of the second impurity diffused resistor 4a and the two ends in the longitudinal direction of the fourth impurity diffused resistor 4b are aligned with each other and closely to each other. The longitudinal directions of the second impurity diffused resistor 4a and the fourth impurity diffused resistor 4b are substantially parallel to the radial directions of the circle about the center within the surface of the semiconductor substrate 1 (the directions of the diagonal lines 1a). The longitudinal directions of the second impurity diffused resistor 4a and the fourth impurity diffused resistor 4b are in the direction of the crystal orientation <110> of the semiconductor substrate 1. The longitudinal directions of the first impurity diffused resistor 3a and the third impurity diffused resistor 3b and the longitudinal directions of the second impurity diffused resistor 4a and the fourth impurity diffused resistor 4b intersect each other substantially at right angles. The reason why both the longitudinal direction of the first impurity diffused resistor 3a and the third impurity diffused resistor 3b and the longitudinal direction of the second impurity diffused resistor 4a and the fourth impurity diffused resistor 4b are in the direction of the crystal orientation <110> of the semiconductor substrate 1 is that these directions are equivalent to each other. Also, the second impurity diffused resistor 4a and the fourth impurity diffused resistor 4b are arranged in line symmetry to each other about the diagonal line 1a.

The Wheatstone bridge 2 (2a, 2b) is formed in at least one of the four corners of the quadrilateral of the semiconductor substrate 1 as viewed in a plan view (for example, in FIG. 1, all the four corners). The sectional area of the Wheatstone bridge 2 (2a, 2b) is small when regarded as a single coil, and the measuring portion (element, circuit, or space) 7 is arranged outside the coil. Therefore, a noise generated in the Wheatstone bridge 2 (2a, 2b) by electromagnetic waves generated from the measuring portion (element, circuit, or space) 7 or electromagnetic waves from outside the device can be restrained. Particularly, in some cases, the measuring portion 7 is formed by a strain sensor, an amplifier circuit, a logic circuit, or the like, and electromagnetic waves may be radiated from these elements. However, even in such cases, a noise generated in the Wheatstone bridge 2 (2a, 2b) can be restrained.

Plural (for example, two in FIG. 1) Wheatstone bridges 2 (2a, 2b) are arranged along a direction from an end part toward the center in the semiconductor substrate 1. Plural (for example, four per diagonal line 1a in FIG. 1) Wheatstone bridges 2 (2a, 2b) are arranged along the diagonal lines 1 a in the quadrilateral of the semiconductor substrate 1 as viewed in a plan view. The Wheatstone bridges 2a and 2b have different distances to the end part of the semiconductor substrate 1. The distance from the Wheatstone bridge 2a to the end part of the semiconductor substrate 1 is shorter than the distance from the Wheatstone bridge 2b to the end part of the semiconductor substrate 1. The Wheatstone bridge 2a is arranged on the outer side than the Wheatstone bridge 2b within the surface of the semiconductor substrate 1.

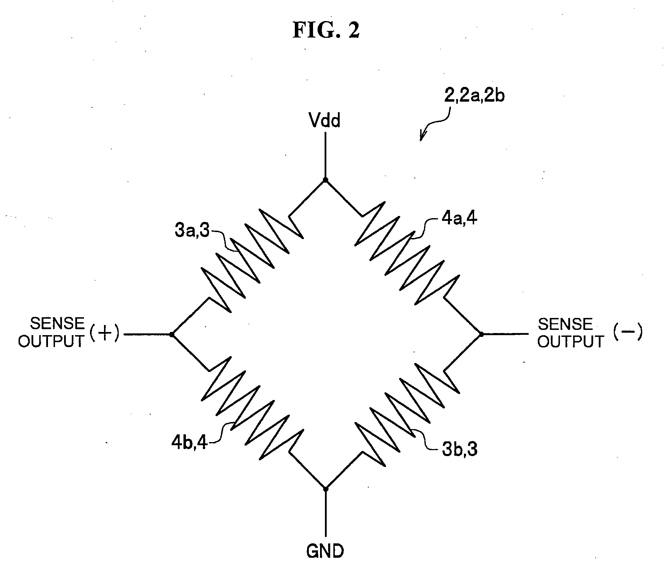

FIG. 2 shows a circuit diagram of the Wheatstone bridge 2 (2a, 2b). An external constant voltage source Vdd is connected to the connection point (node) between the first impurity diffused resistor 3a and the second impurity diffused resistor 4a. The connection point between the third impurity diffused resistor 3b and the fourth impurity diffused resistor 4b is connected to a ground GND and grounded. The connection point between the first impurity diffused resistor 3a and the fourth impurity diffused resistor 4b is connected to an external terminal, and the electric potential at this connection point is outputted as a sense output (+) of the Wheatstone bridge 2 (2a, 2b). The connection point between the second impurity diffused resistor 4a and the third impurity diffused resistor 3b is connected to an external terminal, and the electric potential at this connection point is outputted as a sense output (-) of the Wheatstone bridge 2 (2a, 2b).

In the circuit diagram of the Wheatstone bridge 2 (2a, 2b), the first impurity diffused resistor 3a and the third impurity diffused resistor 3b are arranged opposite each other, and the second impurity diffused resistor 4a and the fourth impurity diffused resistor 4b are arranged opposite each other.

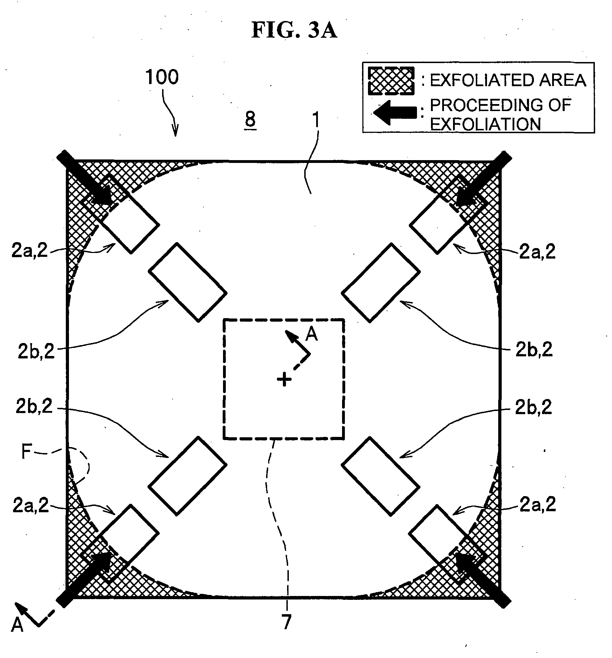

FIG. 3A shows a way of proceedings of the exfoliation of the mechanical quantity measuring device (or semiconductor device, exfoliation detecting device) 100 attached to a measured object (module substrate) 8. The exfoliation occurs in the corners of the quadrilateral of the semiconductor substrate 1 as viewed in a plan view and a exfoliation surface F of the exfoliation proceeds toward the center of the quadrilateral of the semiconductor substrate 1 as viewed in a plan view and concentrically about the center, every temperature cycle or load. Since the Wheatstone bridge 2a (2) is arranged in the corners (four corners) of the quadrilateral of the semiconductor substrate 1 as viewed in a plan view, the exfoliation surface F passes just below the Wheatstone bridge 2a (2) immediately after the occurrence of exfoliation. Thus, with the Wheatstone bridge 2a (2), the occurrence of exfoliation can be detected quickly.

Also, since the Wheatstone bridge 2b (2) is situated ahead of the Wheatstone bridge 2a (2) and behind the measuring portion (element, circuit, or space) 7 in the proceeding direction of exfoliation, the status of proceeding of exfoliation can be detected as the exfoliation surface F passes just below the Wheatstone bridge 2b (2).

As shown in FIG. 3A, in both the Wheatstone bridges 2a and 2b, exfoliation proceeds in directions from outside to inside of the semiconductor substrate 1. Also, as shown in FIG. 1, the impurity diffused resistors 3 (first impurity diffused resistor 3a, third impurity diffused resistor 3b) are arranged on the outer side than the impurity diffused resistors 4 (second impurity diffused resistor 4a, fourth impurity diffused resistor 4b). With these arrangements, exfoliation first passes just below the impurity diffused resistors 3 (first impurity diffused resistor 3a, third impurity diffused resistor 3b) and then passes just below the impurity diffused resistors 4 (second impurity diffused resistor 4a, fourth impurity diffused resistor 4b).

When the parts just below the impurity diffused resistors 3 (first impurity diffused resistor 3a, third impurity diffused resistor 3b) and the impurity diffused resistors 4 (second impurity diffused resistor 4a, fourth impurity diffused resistor 4b) are exfoliated, the mechanical quantity acting on the semiconductor substrate 1 (first impurity diffused resistor 3a, third impurity diffused resistor 3b, second impurity diffused resistor 4a, fourth impurity diffused resistor 4b) from the measured object (module substrate) 8 decreases. Therefore, the resistance of the first impurity diffused resistor 3a, the third impurity diffused resistor 3b, the second impurity diffused resistor 4a, and the fourth impurity diffused resistor 4b changes.

For example consider the case where the resistance of the first impurity diffused resistor 3a, the third impurity diffused resistor 3b, the second impurity diffused resistor 4a, and the fourth impurity diffused resistor 4b decreases due to exfoliation. Referring to FIG. 2, exfoliation proceeds and first passes immediately below the impurity diffused resistors 3 (first impurity diffused resistor 3a, third impurity diffused resistor 3b) and then passes immediately below the impurity diffused resistors 4 (second impurity diffused resistor 4a, fourth impurity diffused resistor 4b). Thus, first, in the stage where the exfoliation surface F passes immediately below the impurity diffused resistors 3 (first impurity diffused resistor 3a, third impurity diffused resistor 3b), the voltage applied to the first impurity diffused resistor 3a and third impurity diffused resistor 3b decreases, and the electric potential of the sense output (+) rises and the electric potential of the sense output (-) falls. The exfoliation can be detected by the rise and fall in the electric potentials. Furthermore, measuring the potential difference (voltage; sense output (difference)) between the electric potential of the sense output (+) and the electric potential of the sense output (-) enables detection of a greater rise (change) in voltage (electric potential) and secure detection of the exfoliation. At the stage where the exfoliation surface F passes immediately below the impurity diffused resistors 3 (first impurity diffused resistor 3a, third impurity diffused resistor 3b) and then arrives immediately below the impurity diffused resistors 4 (second impurity diffused resistor 4a, fourth impurity diffused resistor 4b), the voltage applied to the second impurity diffused resistor 4a and the fourth impurity diffused resistor 4b also decreases, and the change of the electric potential of the sense output (+) turns from rise to fall and the change of the electric potential of the sense output (-) turns from fall to rise. Measuring the potential difference (voltage; sense output (difference)) between the electric potential of the sense output (+) and the electric potential of the sense output (-) enables detection of the voltage to turn from large rise to large fall and a large peak waveform. Then, the detection of the peak waveform can be regarded as the detection of exfoliation.

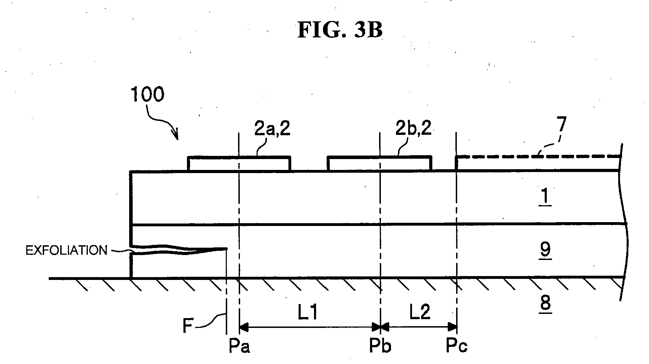

FIG. 3B shows a sectional view taken along arrows A-A in FIG. 3A. The semiconductor substrate 1 is attached to the measured object (module substrate) 8 with an adhesive 9. The adhesive 9 includes an electrically conductive member, for example, solder or the like. FIG. 3B shows the state where the adhesive 9 is exfoliated, with the exfoliation surface F about to reach the position Pa of the Wheatstone bridge 2a (2). Here, the time when the exfoliation reaches the position Pa of the Wheatstone bridge 2a (2) is measured, for example, as time when the peak waveform is detected (peak time). Also, the time when the exfoliation surface F proceeds and reaches the position Pb of the Wheatstone bridge 2b (2) is measured, for example, as the time when the peak waveform is detected (peak time). The distance (proceeding distance) L1 between the position Pa of the Wheatstone bridge 2a (2) and the position Pb of the Wheatstone bridge 2b (2) can be measured (acquired) in advance. Also, by subtracting the time when the exfoliation surface F reaches the position Pa of the Wheatstone bridge 2a (2) (peak time) from the time when the exfoliation surface F reaches the position Pb of the Wheatstone bridge 2b (2) (peak time), the time required for the exfoliation surface F to proceed from the position Pa of the Wheatstone bridge 2a (2) to the position Pb of the Wheatstone bridge 2b (2) can be calculated. By dividing the proceeding distance L1 by the time required for this proceeding, the proceeding speed of the exfoliation surface F can be calculated.

Moreover, the distance (remaining distance) L2 between the position Pb of the Wheatstone bridge 2b (2) and the position Pc of the end of the measuring portion (element, circuit, or space) 7 can be measured (acquired) in advance. By dividing the remaining distance L2 by the calculated proceeding speed, the time required for the exfoliation surface F to proceed from the position Pb of the Wheatstone bridge 2b (2) to the position Pc of the end of the measuring portion (element, circuit, or space) 7 can be calculated. Then, by adding this time to the time when the exfoliation surface F reaches the position Pb of the Wheatstone bridge 2b (2) (peak time), the arrival time when the exfoliation surface F reaches the position Pc of the end of the measuring portion (element, circuit, or space) 7 can be calculated. That is, the time when failure tends to occur can be calculated and predicted.

Note that in the first embodiment, since the two Wheatstone bridges 2a and 2b are arranged in the exfoliation proceeding direction where the exfoliation reaches the measuring portion (element, circuit, or space) 7, the time when the exfoliation surface F reaches the position Pc of the end of the measuring portion (element, circuit, or space) 7 is estimated based on the proceeding speed of the exfoliation surface F between the Wheatstone bridges 2a and 2b. However, if three or more Wheatstone bridges 2 (2a, 2b) are arranged in the proceeding direction, the proceeding speed between the plural Wheatstone bridges 2 (2a, 2b) can be calculated (acquired) and therefore the time when the exfoliation surface F reaches the position Pc of the end of the measuring portion (element, circuit, or space) 7 can be estimated more accurately.

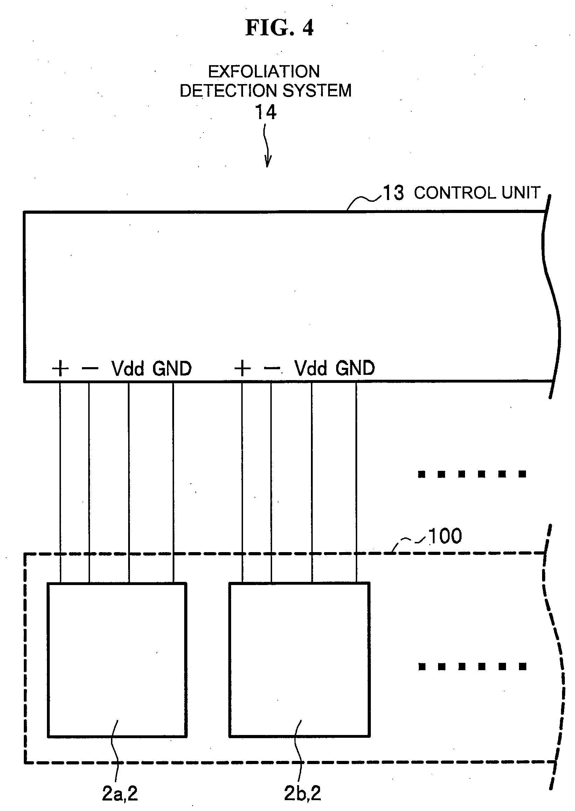

FIG. 4 shows a configuration view of an exfoliation detection system 14 including the mechanical quantity measuring device (or semiconductor device, exfoliation detecting device) 100 according to the first embodiment of the invention. The exfoliation detection system 14 detects the foregoing exfoliation or estimates the time when the exfoliation surface F reaches the position Pc of the end of the measuring portion (element, circuit, or space) 7. The exfoliation detection system 14 includes the mechanical quantity measuring device (or semiconductor device, exfoliation detecting device) 100 and a control unit 13. Plural Wheatstone bridges 2a and 2b are formed in the mechanical quantity measuring device (or semiconductor device, exfoliation detecting device) 100. The sense output (+)(or electric potential of the sense output (+)) of the Wheatstone bridges 2a and 2b is outputted to the control unit 13. The sense output (-)(or electric potential of the sense output (-)) of the Wheatstone bridges 2a and 2b is outputted to the control unit 13. The Wheatstone bridges 2a and 2b can be connected to the external constant voltage source Vdd via the control unit 13. The Wheatstone bridges 2a and 2b are connected to the ground GND via the control unit 13 and thus grounded.

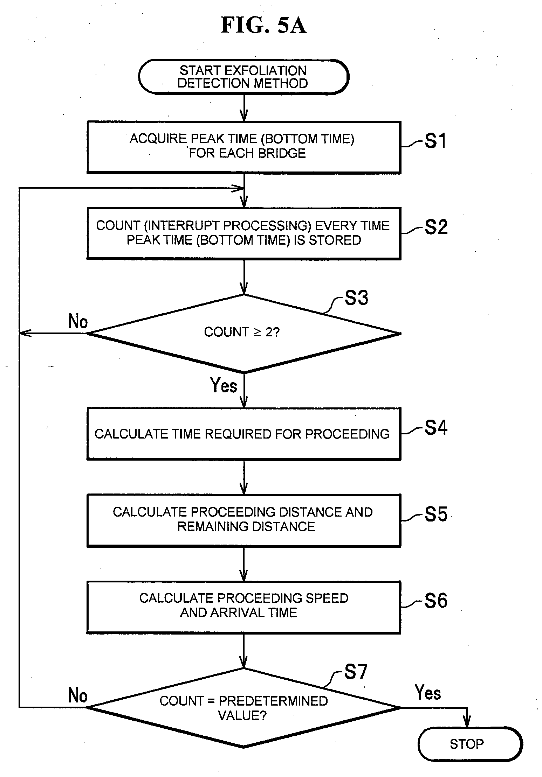

FIG. 5A shows a flowchart of an exfoliation detection method carried out by the exfoliation detection system 14.

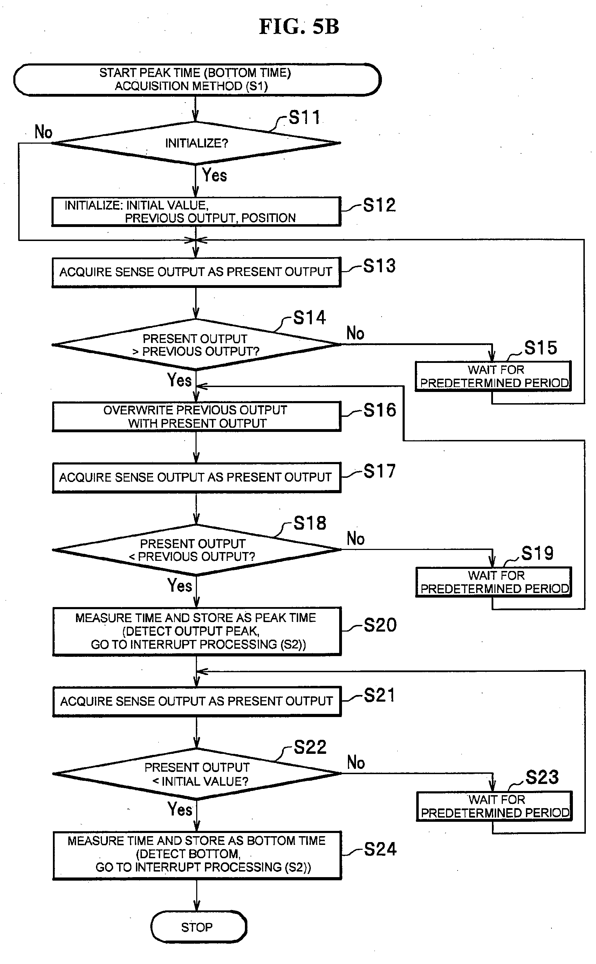

First, in step S1, the control unit 13 acquires the peak time (or bottom time) of each Wheatstone bridge (bridge) 2 (2a, 2b). Details of the method for acquiring the peak time (or bottom time) will be described, using the flowchart of the peak time (or bottom time) acquisition method shown in FIG. 5B. Note that this acquisition method (flow of the method) of the peak time (or bottom time) is carried out for every Wheatstone bridge (bridge) 2 (2a, 2b) and plural acquisition flows are carried out simultaneously.

First, in step S11, the control unit 13 determines whether to carry out initialization or not. If initialization is not carried out yet, it is determined that initialization is to be carried out (step S11, Yes) and the process goes to step S12. If initialization is already carried out, it is determined that initialization is not to be carried out (step S11, No) and the process goes to step S 13.

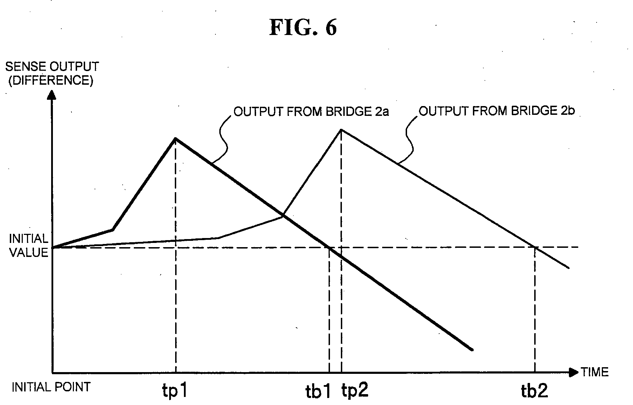

In step S12, the control unit 13 carries out initialization. FIG. 6 shows waveforms of the potential difference (sense output (difference)) between the electric potential of the sense output (+) and the electric potential of the sense output (-) outputted from the Wheatstone bridges (simply bridges in FIG. 6) 2 (2a, 2b). In initialization, the control unit 13 stores the sense output (difference) at the time of this initialization as an initial value and also as a previous output. Also, the control unit 13 acquires the positions Pa, Pb, Pc shown in FIG. 3B according to an input or the like by an operator.

In step S 13, the control unit 13 acquired the sense output (difference) as a present output.

In step S 14, the control unit 13 determines whether the present output is larger than the previous output (present output > previous output) or not. If the present output is determined as larger than the previous output (step S 14, Yes), a rising trend of the output from the bridge 2 (2a, 2b) of FIG. 6 can be detected and this rising trend is regarded as the detection of proceeding of exfoliation. The process goes to step S16. If the present output is determined as not larger than the previous output (step S 14, No), it is considered that exfoliation is not detected. The process goes to step S15, waits for a predetermined period, and then returns to step S13.

In step S16, the control unit 13 overwrites the previous output with the present output and stores the present output as a previous output.

In step S 17, as in step S 13, the control unit 13 acquires the sense output (difference) as a present output.

In step S18, the control unit 13 determines whether the present output is smaller than the previous output (present output < previous output) or not. If the present output is determined as smaller than the previous output (step S18, Yes), it is considered that a peak waveform (a waveform of a rise followed by a fall) of the output (sense output (difference)) from the bridge 2 (2a, 2b) of FIG. 6 is detected, and the process goes to step S20. If the present output is determined as not smaller than the previous output (step S18, No), it is considered that the output (sense output (difference)) from the bridge 2 (2a, 2b) of FIG. 6 is still in a rising process. The process goes to step S 19, waits for a predetermined period, and then returns to step S16.

In this manner, it can be seen that exfoliation can be detected both in step S 14 and in step S18. And, it can be seen that exfoliation can be detected by the single Wheatstone bridge 2 (2a, 2b). That is, if exfoliation occurs in the place where the Wheatstone bridge 2 (2a, 2b) is arranged, the Wheatstone bridge 2 (2a, 2b) can detect the exfoliation. Therefore, even if exfoliations occur simultaneously in the four corners, each exfoliation can be detected as long as the Wheatstone bridge 2 (2a, 2b) is arranged there.

By the way, the rising slope of the peak waveform of the output (sense output (difference)) from the bridge 2 (2a, 2b) of FIG. 6 is larger than the falling slope. This is because the longitudinal direction of the impurity diffused resistors 3 shown in FIG. 1 intersects the exfoliation proceeding direction shown in FIG. 3A at right angles, whereas the longitudinal direction of the impurity diffused resistors 4 shown in FIG. 1 is parallel to the exfoliation proceeding direction. The exfoliation surface F can pass below the impurity diffused resistors 3 by moving only a short distance and therefore can pass in a short time. Thus, the rising slope is large (acute). On the other hand, the exfoliation surface F cannot pass below the impurity diffused resistors 4 without moving a long distance and therefore takes a long time to pass. Thus, the falling slope is small (gentle). In this way, having an acute rise at first in the peak waveform enables early determination of whether exfoliation is detected or not. Then, the gentle falling in the peak waveform, raised once, makes the peak waveform difficult to overlook.

In step S20, the control unit 13 measures the current time, using a built-in timer, and stores the current time as peak times tp1, tp2, as shown in the peak waveform of the output (sense output (difference)) from the bridge 2 (2a, 2b) of FIG. 6. This is equivalent to the detection of the output peak (peak waveform). Then, triggered by the end of the execution of step S20 for each Wheatstone bridge 2, the interrupt processing in step S2 of FIG. 5A is started.

In step S21, as in step S13, the control unit 13 acquires the sense output (difference) as a present output.

In step S22, the control unit 13 determines whether the present output is smaller than the initial value (present output < initial value) or not. If the present output is determined as smaller than the initial value (step S22, Yes), it is considered that the waveform of the sense output (difference) rises and then falls and that the exfoliation surface F is almost past the Wheatstone bridge 2, and the process goes to step S24. If the present output is determined as not smaller than the initial value (step S22, No), it is considered that the exfoliation surface F is not past the Wheatstone bridge 2. The process goes to step S23, waits for a predetermined period, and then returns to step S21.

In addition, since exfoliationreleases the impurity diffused resistors 3, 4 (semiconductor substrate 1) not only from the mechanical quantity acting on the measured object (module substrate) 8 but also from the residual strain generated at the time of adhering, the sense output (difference) falls below the initial value. The relation between output changes in the bridges 2a, 2b and the proceeding of exfoliation as shown in FIG. 3A, FIG. 3B, and FIG. 6 was found by the inventors as the result of measuring the sense output (difference) while observing the state of exfoliation, using an ultrasonic nondestructive testing method.

In step S24, the control unit 13 measures the current time, using the built-in timer, and stores the current time as bottom times tb1, tb2, as shown in the peak waveform of the output (sense output (difference)) from the bridge 2 (2a, 2b) of FIG. 6. This means that the bottom of the output peak (peak waveform) is detected. With the above, the flow of the method for acquiring the peak times tp1, tp2 (or bottom times tb1, tb2) ends. Then, triggered by the end of the execution of step S24 for each Wheatstone bridge 2, the interrupt processing in step S2 of FIG. 5A may be started. As another way, if the peak times tp1, tp2 in S20 are employed but the bottom times in S24 are not employed in the exfoliation detection method of FIG. 5A, steps S21 to S24 can be omitted.

The explanation goes back to the flowchart of FIG. 5A. In step S1, the control unit 13 acquires the peak times tp1, tp2 (or bottom times tb1, tb2) for every Wheatstone bridge (bridge) 2 (2a, 2b). And, in step S2, the control unit 13 counts the number of the peak times tp1, tp2 (or bottom times tb1, tb2) that are stored, as so-called interrupt processing, every time the peak times tp1, tp2 are stored in step S20 or the bottom times tb1, tb2 are stored in step S24.

Next, in step S3, the control unit 13 determines whether the count is two or greater (count ≥ 2) or not. If the count is determined as two or greater (step S3, Yes), the peak times tp1, tp2 (or bottom times tb1, tb2) are acquired for two or more Wheatstone bridges (bridges) 2 (2a, 2b). Therefore, it is considered that the time required for the proceeding of exfoliation can be calculated, and the process goes to step S4. If the count is determined as not equal to or greater than two (step S3, No), the process waits until the next interrupt processing (step S2) occurs.

In step S4, the control unit 13 subtracts the peak time tp1 (or bottom time tb1) at the Wheatstone bridge 2a, from the peak time tp2 (or bottom time tb2) at the Wheatstone bridge 2b, to calculate the time required for the proceeding of exfoliation from the Wheatstone bridge 2a to the Wheatstone bridge 2b.

In step S5, the control unit 13 calculates the proceeding distance L1 and the remaining distance L2, based on the positions Pa, Pb, and Pc.

In step S6, the control unit 13 divides the proceeding distance L1 by the time required for the proceeding to calculate the proceeding speed. Next, the control unit 13 divides the remaining distance L2 by the proceeding speed to calculate the time required for the exfoliation to proceed through the remaining distance L2. Finally, the time required for the exfoliation to proceed through the remaining distance L2 is added to the peak time tp2 (or bottom time tb2) of the Wheatstone bridge 2b, thus calculating the arrival time when the exfoliation reaches the measuring portion (element, circuit, or space) 7.

In step S7, the control unit 13 determines whether the count is equal to (reaches) a predetermined value (count = predetermined value) or not. As a predetermined value, it is preferable to set the number of Wheatstone bridges 2 (2a, 2b) arrayed in the direction from the end of the semiconductor substrate 1 toward the central part 1c in advance. In the example of the first embodiment (FIG. 1), the predetermined value is 2. If the count is determined as equal to the predetermined value (step S7, Yes), the exfoliation detection method is ended. If the count is determined as not equal to the predetermined value (step S7, No), the process waits until the next interrupt processing (step S2) occurs, and steps S3 to S6 are carried out. Thus, the arrival time with higher accuracy can be calculated.

### (Second Embodiment)

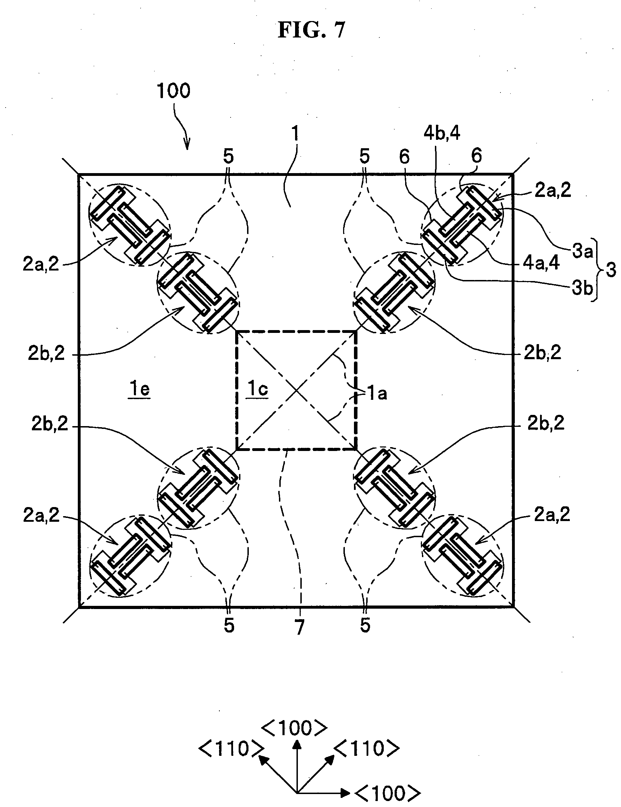

FIG. 7 shows a plan view of the mechanical quantity measuring device (semiconductor device, or exfoliation detecting device) 100 according to a second embodiment of the invention. The mechanical quantity measuring device (semiconductor device, or exfoliation detecting device) 100 according to the second embodiment is different from the mechanical quantity measuring device (semiconductor device, or exfoliation detecting device) 100 according to the first embodiment in that the third impurity diffused resistor 3b is arranged on the inner side than the second impurity diffused resistor 4a and the fourth impurity diffused resistor 4b inside the semiconductor substrate 1. According to this, the length of the wire 6 can be shortened. Also, the sectional area of the Wheatstone bridge 2 (2a, 2b) as viewed as a single coil can be reduced and the generation of a noise can be restrained further. However, after the peak waveform rises as the exfoliation passes the first impurity diffused resistor 3a, the peak waveform turns to a fall as the exfoliation passes the second impurity diffused resistor 4a and fourth impurity diffused resistor 4b, instead of rising further as the exfoliation passes the third impurity diffused resistor 3 b as in the first embodiment. Therefore, the amount of change in the sense output (difference) is approximately half and the detection sensitivity falls.

### (Third Embodiment)

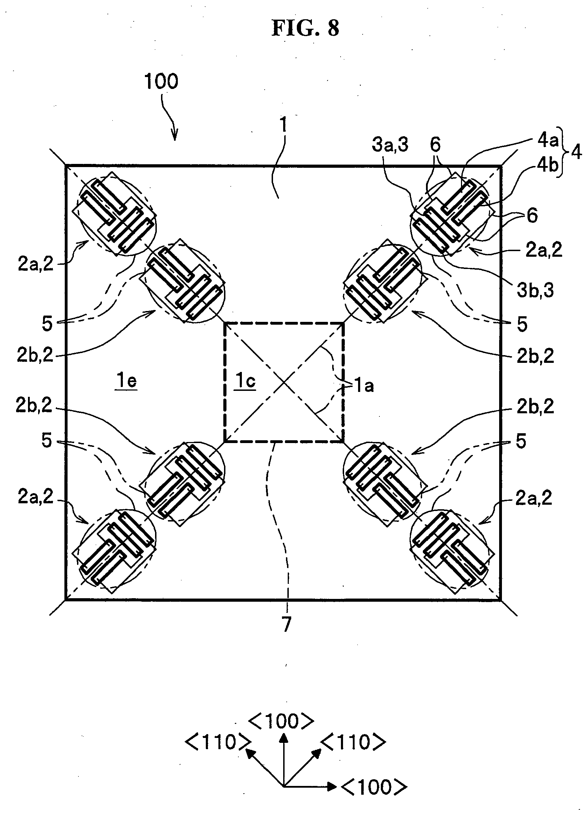

FIG. 8 shows a plan view of the mechanical quantity measuring device (semiconductor device, or exfoliation detecting device) 100 according to a third embodiment of the invention. The mechanical quantity measuring device (semiconductor device, or exfoliation detecting device) 100 according to the third embodiment is different from the mechanical quantity measuring device (semiconductor device, or exfoliation detecting device) 100 according to the first embodiment in that the first impurity diffused resistor 3a and third impurity diffused resistor 3b are arranged on the inner side than the second impurity diffused resistor 4a and fourth impurity diffused resistor 4b inside the semiconductor substrate 1. According to this, the peak waveform (exfoliation detection process) falls first and then rises after an inverse peak. Additionally, the slope of the fall that appears first is gentle and the slope of the rise that appears next is acute. Also, in FIG. 8, if the positions of the first impurity diffused resistor 3a and second impurity diffused resistor 4a are switched and the positions of the third impurity diffused resistor 3b and fourth impurity diffused resistor 4b are switched, the peak waveform rises first and then falls after a peak. And, the slope of the rise that appears first can be gentle and the slope of the fall that appears next can be acute. Also with these arrangements, exfoliation can be detected highly accurately, based on a large amount of change in the sense output (difference).

### (Fourth Embodiment)

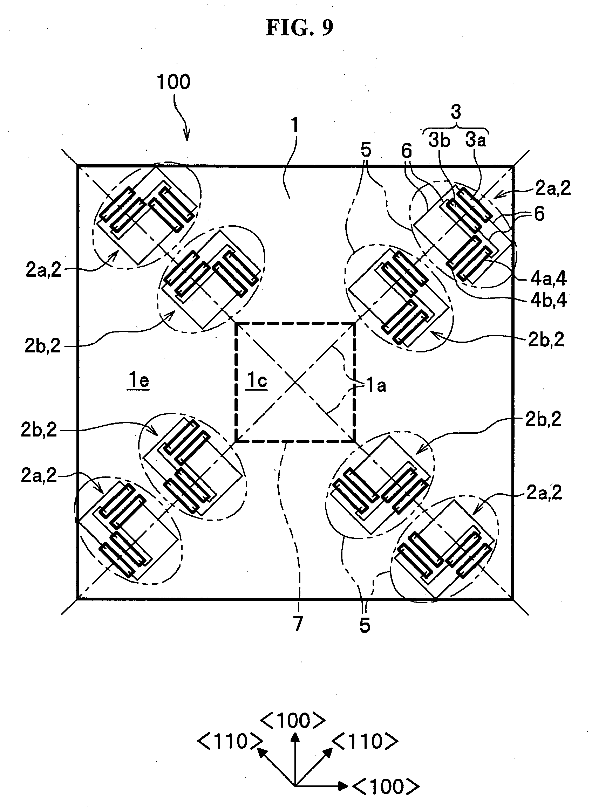

FIG. 9 shows the mechanical quantity measuring device (semiconductor device, or exfoliation detecting device) 100 according to a fourth embodiment of the invention. The mechanical quantity measuring device (semiconductor device, or exfoliation detecting device) 100 according to the fourth embodiment is different from the mechanical quantity measuring device (semiconductor device, or exfoliation detecting device) 100 according to the first embodiment in that the second impurity diffused resistor 4a and fourth impurity diffused resistor 4b are not arranged in line symmetry to each other about the diagonal line 1a. Even such an arrangement can achieve similar effects to the first embodiment. Similarly, even if each of the first impurity diffused resistor 3a and third impurity diffused resistor 3b is not arranged in line symmetry about the diagonal line 1 a, similar effects to the first embodiment can be achieved. According to these, the degree of freedom in the layout of the first impurity diffused resistor 3a, third impurity diffused resistor 3b, second impurity diffused resistor 4a, and fourth impurity diffused resistor 4b can be improved.

### (Fifth Embodiment)

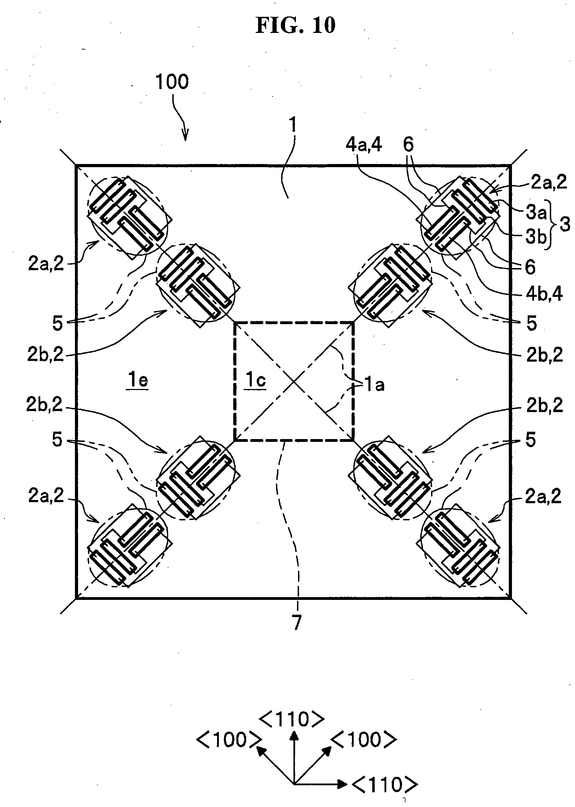

FIG. 10 shows a plan view of the mechanical quantity measuring device (semiconductor device, or exfoliation detecting device) 100 according to a fifth embodiment of the invention. The mechanical quantity measuring device (semiconductor device, or exfoliation detecting device) 100 according to the fifth embodiment is different from the mechanical quantity measuring device (semiconductor device, or exfoliation detecting device) 100 according to the first embodiment in that the conduction type of the impurity diffused resistors 3, 4 is n-type. If the longitudinal directions of the impurity diffused resistors 3, 4 with n-type conduction are made coincident with the direction of the crystal orientation <100> of the semiconductor substrate 1, the highest rate of change in electrical resistance to an acting mechanical quantity can be obtained. That is, so-called sensitivity can be at its highest. Accordingly, in order to arrange the Wheatstone bridge 2 (2a, 2b) in the four corners of the semiconductor substrate 1, the sides of the quadrilateral of the surface of the semiconductor substrate 1 are set to be substantially parallel to or intersect substantially at right angles the crystal orientation <110> of the semiconductor substrate 1. This can also achieve similar effects to the first embodiment.

On the other hand, if the longitudinal directions of the impurity diffused resistors 3, 4 with p-type conduction are made coincident with the direction of the crystal orientation <110> of the semiconductor substrate 1, as in the first embodiment or the like, the highest rate of change in electrical resistance to an acting mechanical quantity can be obtained. That is, the sensitivity can be obtained at its highest. Therefore, in the first embodiment or the like, in order to arrange the Wheatstone bridge 2 (2a, 2b) in the four corners of the semiconductor substrate 1, the sides of the quadrilateral of the surface of the semiconductor substrate 1 are set to be substantially parallel to or intersect substantially at right angles the crystal orientation <100> of the semiconductor substrate 1.

### (Sixth Embodiment)

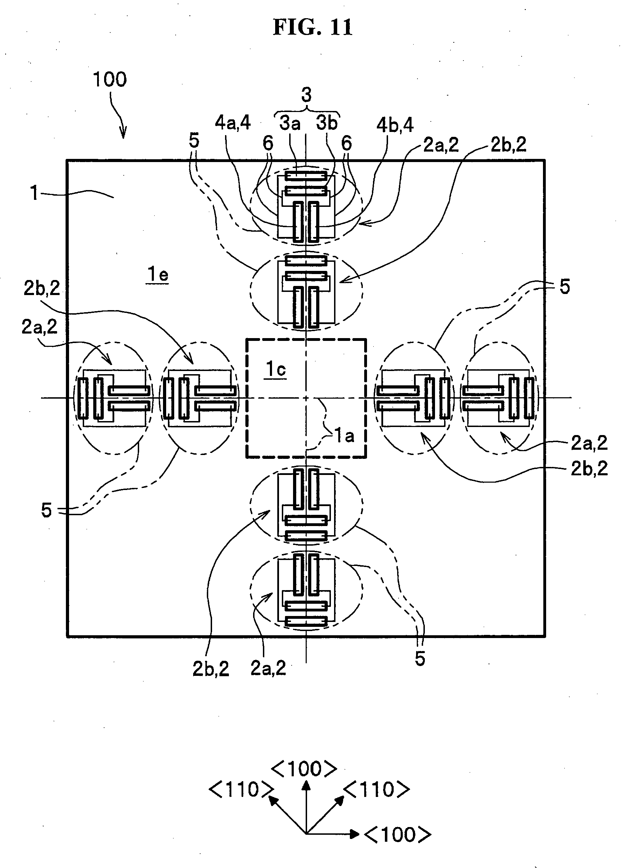

FIG. 11 shows a plan view of the mechanical quantity measuring device (semiconductor device, or exfoliation detecting device) 100 according to a sixth embodiment of the invention. The mechanical quantity measuring device (semiconductor device, or exfoliation detecting device) 100 according to the sixth embodiment is different from the mechanical quantity measuring device (semiconductor device, or exfoliation detecting device) 100 according to the fifth embodiment in that the sides of the quadrilateral of the surface of the semiconductor substrate 1 are set to be substantially parallel to or intersect substantially at right angles the crystal orientation <100> of the semiconductor substrate 1 as in the first embodiment or the like. Accordingly, the Wheatstone bridges 2 (2a, 2b) are arranged near the center of the sides, instead of the four corners of the semiconductor substrate 1. Also with such an arrangement, the longitudinal directions of the impurity diffused resistors 3, 4 with n-type conduction can be made coincident with the direction of the crystal orientation <100> of the semiconductor substrate 1 and the impurity diffused resistors 3, 4 can be used in a high-sensitivity state. Also, the longitudinal direction of the impurity diffused resistors 3 intersects, at right angles, the radial direction of a circle about the center of the surface of the semiconductor substrate 1, and therefore intersects the proceeding direction of exfoliation at right angles. Thus, as in the first embodiment, an acute rising waveform can be achieved in the peak waveform (exfoliation detection process).

### (Seventh Embodiment)

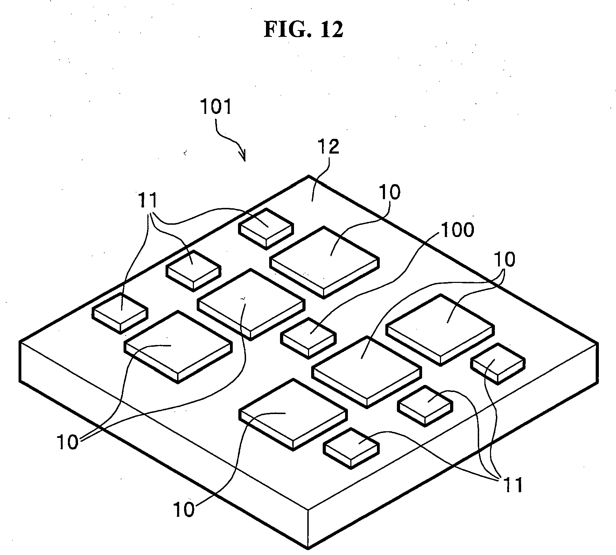

FIG. 12 shows a perspective view of a module 101 according to a seventh embodiment, equipped with the exfoliation detecting device (mechanical quantity measuring device, or semiconductor device) 100 described in the first to sixth embodiments. The module 101 has a module substrate 12. On the module substrate 12 attached are a semiconductor device (for example, inverter chip) 10, a semiconductor device (for example, diode chip) 11, and the mechanical quantity measuring device (semiconductor device, or exfoliation detecting device) 100. This attachment is done with the adhesive 9 including solder or the like. As a specific example, the devices are attached with plural bumps of solder, gold or the like, securing electrical conductivity, and also with insulating underfills of resin or the like filling the spaces among the bumps. Thus, the devices are attached in a complex manner. If the semiconductor device 10 is, for example, an inverter chip, the module 101 functions as an inverter module. Depending on the elements or circuits installed in the semiconductor devices 10 and 11, the function of the module 101 as well as the functions of the semiconductor devices 10 and 11 is determined.

The mechanical quantity measuring device (semiconductor device, or exfoliation detecting device) 100 is attached near the semiconductor devices 10 or 11 within the module substrate 12. The semiconductor devices 10 and 11 are electrified for use, and the electrification generates heat in the semiconductor devices 10 and 11. This generation of heat is considered to cause large heat strain in the solder or the like attaching the semiconductor devices 10 and 11 to the module substrate 12, causing exfoliation to occur and proceed in the solder or the like in some cases. In such cases, failure due to wire disconnection or the like occurs in the end.

The heat generated in the semiconductor devices 10 and 11 heats the mechanical quantity measuring device (or semiconductor device, or exfoliation detecting device) 100 through conduction via the module substrate 12 or radiation. It is considered that large heat strain is generated in the solder or the like attaching the mechanical quantity measuring device (semiconductor device, exfoliation detecting device) 100 to the module substrate 12, causing exfoliation to occur and proceed at the solder or the like. By detecting this exfoliation using the mechanical quantity measuring device (semiconductor device, exfoliation detecting device) 100, the exfoliation between the semiconductor devices 10 or 11, and the module substrate 12 that is thought to be taking place at the same time can be detected indirectly. Also, by calculating the proceeding speed or the like of the exfoliation, the timing when failure in the semiconductor devices 10 or 11 and the module 101 may occur can be predicted and these devices and module can be replaced in advance. Moreover, the mechanical quantity measuring device (semiconductor device, exfoliation detecting device) 100 may be attached to a place with the highest temperature within the module substrate 12. In this case, the mechanical quantity measuring device (semiconductor device, exfoliation detecting device) 100 may have a higher temperature than the semiconductor devices 10 and 11, depending on the status of heat radiation. Thereby, the mechanical quantity measuring device (semiconductor device, or exfoliation detecting device) 100 can be put in a circumstance where exfoliation can occur and proceed more easily than in the semiconductor devices 10 and 11. By replacing the semiconductor devices 10 or 11, and the module 101 when detecting the exfoliation with the mechanical quantity measuring device (semiconductor device, exfoliation detecting device) 100, failure due to wire disconnection or the like in these devices and module in use will not occur.

In order to cause generation of exfoliation on the mechanical quantity measuring device (semiconductor device, exfoliation detecting device) 100 simultaneously with or earlier than in the semiconductor devices 10 and 11, and to cause the exfoliation to proceed at the same speed or at a higher speed, attachment conditions such as material constituents and thickness of the solder or the like used for attachment are made totally equal. Also, it is desirable that the thickness and surface shape of the mechanical quantity measuring device (semiconductor device, exfoliation detecting device) 100 are equal to those of the semiconductor devices 10 or 11.

### Reference Symbols List

1 semiconductor substrate
1a diagonal line
1c central part of semiconductor substrate
1e outer peripheral part of semiconductor substrate
2, 2a, 2b Wheatstone bridge
3 impurity diffused resistor
3 a first impurity diffused resistor
3b third impurity diffused resistor
4 impurity diffused resistor
4a second impurity diffused resistor
4b fourth impurity diffused resistor
5 group (of impurity diffused resistors)
6 wire
7 measuring portion (element, circuit, or space)
8 measured object (module substrate)
9 adhesive
10 semiconductor device (inverter chip)
11 semiconductor device (diode chip)
12 module substrate
13 control unit
14 exfoliation detection system
100 mechanical quantity measuring device (semiconductor device, exfoliation detecting device)
101 module

## Claims

1. An exfoliation detecting device (100) comprising:
a semiconductor substrate (1) being adapted to be attached to an external object (8);
a space (7) in the central part (1c) of the semiconductor substrate (1);
plural impurity diffused resistors (3a, 3b, 4a, 4b) forming at least one group (5) gathering closely to each other in at least one place, the plural impurity diffused resistors (3a, 3b, 4a, 4b) forming each group being placed on an outer peripheral part (1e) outside the central part (1c) of the semiconductor substrate (1) and connected to each other to form a Wheatstone bridge (2a, 2b); and a control unit (13) adapted to acquire the output voltages from at least one Wheatstone bridge (2a, 2b) for detecting exfoliation.

2. A semiconductor device comprising:
the exfoliation detecting device (100) according to claim 1; and
an element or a circuit (7) arranged at the central part (1c) of the semiconductor substrate (1).

3. A mechanical quantity measuring device comprising:
the exfoliation detecting device (100) according to claim 1; and
a measuring portion (7) measuring the strain on the external measured object (8), the measuring portion (7) being arranged at the central part (1c) of the semiconductor substrate (1), wherein
the semiconductor substrate (1) being attached to an external measured object (8) to measure strain on the external measured object (8).

4. A module (101) comprising:
a semiconductor device (10) having an element or circuit provided on a semiconductor substrate attached to a module substrate (12), **characterized in that** the exfoliation detecting device (100) according to claim 1 is attached near the semiconductor device (10) in the module substrate (12).

5. The mechanical quantity measuring device according to claim 3, **characterized in that** the semiconductor substrate (1) is quadrilateral as viewed in a plan view, and that the Wheatstone bridge (2a, 2b) is formed at least in one of the four corners of the quadrilateral.

6. The mechanical quantity measuring device according to claim 3, **characterized in that** plurality of Wheatstone bridges (2a, 2b) are arranged, each along a direction from an end part of the semiconductor substrate (1) toward the center.

7. The mechanical quantity measuring device according to claim 3, **characterized in that** plurality of Wheatstone bridges (2a, 2b) are formed, each having different distance to an end part of the semiconductor substrate (1).

8. The mechanical quantity measuring device according to claim 3, **characterized in that**
the plural impurity diffused resistors (3a, 3b, 4a, 4b) forming one of the groups (5) include:
a first impurity diffused resistor,
a second impurity diffused resistor with one end thereof connected to one end of the first impurity diffused resistor,
a third impurity diffused resistor with one end thereof connected to the other end of the second impurity diffused resistor, and
a fourth impurity diffused resistor with one end thereof connected to the other end of the third impurity diffused resistor and with the other end thereof connected to the other end of the first impurity diffused resistor.

9. The mechanical quantity measuring device according to claim 8, **characterized in that**
the first impurity diffused resistor is arranged on the outer side than the second impurity diffused resistor and the fourth impurity diffused resistor within the semiconductor substrate (1).

10. The mechanical quantity measuring device according to claim 9, **characterized in that**
the third impurity diffused resistor is arranged on the outer side than the second impurity diffused resistor and the fourth impurity diffused resistor within the semiconductor substrate (1).

11. The mechanical quantity measuring device according to claim 9 or 10, **characterized in that**
a current is adapted to flow in a longitudinal direction of each of the second impurity diffused resistor and the fourth impurity diffused resistor, that
the longitudinal direction of the second impurity diffused resistor and the longitudinal direction of the fourth impurity diffused resistor are substantially parallel to each other, and that
two ends of the second impurity diffused resistor and two ends of the fourth impurity diffused resistor are aligned with each other and closely to each other.

12. The mechanical quantity measuring device according to claim 11, **characterized in that**
the longitudinal directions of the second impurity diffused resistor and the fourth impurity diffused resistor are substantially parallel to a radial direction of a circuit about the center in a surface of the semiconductor substrate (1).

13. The mechanical quantity measuring device according to claim 11 or 12, **characterized in that**
a current is adapted to flow in a longitudinal direction of each of the first impurity diffused resistor and the third impurity diffused resistor, and that
the longitudinal direction of the first impurity diffused resistor and the longitudinal direction of the third impurity diffused resistor are substantially parallel to each other.

14. The mechanical quantity measuring device according to claim 13, **characterized in that**
the longitudinal directions of the first impurity diffused resistor and the third impurity diffused resistor intersect, substantially at right angles, the radial direction of the circle about the center in the surface of the semiconductor substrate (1).

15. The mechanical quantity measuring device according to claim 14, **characterized in that**
two ends of the first impurity diffused resistor and two ends of the third impurity diffused resistor are aligned with each other and closely to each other.

## Patentansprüche

1. Abblätterungsdetektionsvorrichtung (100), die Folgendes umfasst:
ein Halbleitersubstrat (1), das dazu ausgelegt ist, an einem außenliegenden Objekt (8) befestigt zu sein;
einen Raum (7) in dem zentralen Teil (1c) des Halbleitersubstrats (1);
mehrere Verunreinigungsdiffusionswiderstände (3a, 3b, 4a, 4b), die mindestens eine Gruppe (5) bilden, die an mindestens einem Ort nah beieinander zusammengefasst sind,
wobei die mehreren Verunreinigungsdiffusionswiderstände (3a, 3b, 4a, 4b) jede Gruppe bilden, die auf einem äußeren Umfangsteil (1e) außerhalb des zentralen Teils (1c) des Halbleitersubstrats (1) angeordnet sind und miteinander verbunden sind, um eine Wheatstone-Brücke (2a, 2b) zu bilden;
eine Steuereinheit (13), die dazu ausgelegt ist, die Ausgangsspannungen von mindestens einer Wheatstone-Brücke (2a, 2b) zum Detektieren einer Abblätterung zu erhalten.

2. Halbleitervorrichtung, die Folgendes umfasst:
die Abblätterungsdetektionsvorrichtung (100) nach Anspruch 1; und
ein Element oder eine Schaltung (7), das bzw. die bei dem zentralen Teil (1c) des Halbleitersubstrats (1) angeordnet ist.

3. Messvorrichtung für eine mechanische Größe, die Folgendes umfasst:
die Abblätterungsdetektionsvorrichtung (100) nach Anspruch 1; und
einen Messabschnitt (7), der die Dehnbeanspruchung auf das außenliegende gemessene Objekt (8) misst, wobei der Messabschnitt (7) bei dem zentralen Teil (1c) des Halbleitersubstrats (1) angeordnet ist, wobei
das Halbleitersubstrat (1) an einem außenliegenden gemessenen Objekt (8) befestigt ist, um eine Dehnbeanspruchung auf das außenliegende gemessene Objekt (8) zu messen.

4. Modul (101), das Folgendes umfasst:
eine Halbleitervorrichtung (10), die ein Element oder eine Schaltung besitzt, das bzw. die auf einem Halbleitersubstrat vorgesehen ist, das an einem Modulsubstrat (12) befestigt ist, **dadurch gekennzeichnet, dass** die Abblätterungsdetektionsvorrichtung (100) nach Anspruch 1 in der Nähe der Halbleitervorrichtung (10) in dem Modulsubstrat 12) befestigt ist.

5. Messvorrichtung für eine mechanische Größe nach Anspruch 3, **dadurch gekennzeichnet, dass** das Halbleitersubstrat (1) in der Draufsicht vierseitig ist und dass
die Wheatstone-Brücke (2a, 2b) in mindestens einer der vier Ecken des Vierecks gebildet ist.

6. Messvorrichtung für eine mechanische Größe, nach Anspruch 3, **dadurch gekennzeichnet, dass**
mehrere Wheatstone-Brücken (2a, 2b) jeweils entlang einer Richtung von einem Endteil des Halbleitersubstrats (1) in Richtung zum Zentrum angeordnet sind.

7. Messvorrichtung für eine mechanische Größe nach Anspruch 3, **dadurch gekennzeichnet, dass**
mehrere Wheatstone-Brücken (2a, 2b) jeweils mit einem unterschiedlichen Abstand zu einem Endteil des Halbleitersubstrats (1) gebildet sind.

8. Messvorrichtung für eine mechanische Größe nach Anspruch 3, **dadurch gekennzeichnet, dass**
die mehreren Verunreinigungsdiffusionswiderstände (3a, 3b, 4a, 4b), die eine der Gruppen (5) bilden, Folgendes enthalten:
einen ersten Verunreinigungsdiffusionswiderstand,
einen zweiten Verunreinigungsdiffusionswiderstand, wobei eines seiner Enden mit einem Ende des ersten Verunreinigungsdiffusionswiderstands verbunden ist,
einen dritten Verunreinigungsdiffusionswiderstand, wobei eines seiner Enden mit dem anderen Ende des zweiten Verunreinigungsdiffusionswiderstands verbunden ist, und
einen vierten Verunreinigungsdiffusionswiderstand, wobei eines seiner Enden mit dem anderen Ende des dritten Verunreinigungsdiffusionswiderstands verbunden ist und wobei das andere seiner Enden mit dem anderen Ende des ersten Verunreinigungsdiffusionswiderstands verbunden ist.

9. Messvorrichtung für eine mechanische Größe nach Anspruch 8, **dadurch gekennzeichnet, dass**
der erste Verunreinigungsdiffusionswiderstand auf der Seite, die weiter außen als der zweite Verunreinigungsdiffusionswiderstand und der vierte Verunreinigungsdiffusionswiderstand liegt, innerhalb des Halbleitersubstrats (1) angeordnet ist.

10. Messvorrichtung für eine mechanische Größe nach Anspruch 9, **dadurch gekennzeichnet, dass**
der dritte Verunreinigungsdiffusionswiderstand auf der Seite, die weiter außen als der zweite Verunreinigungsdiffusionswiderstand und der vierte Verunreinigungsdiffusionswiderstand liegt, innerhalb des Halbleitersubstrats (1) angeordnet ist.

11. Messvorrichtung für eine mechanische Größe nach Anspruch 9 oder 10, **dadurch gekennzeichnet, dass**
ein Strom dazu ausgelegt ist, in eine longitudinale Richtung jeweils des zweiten Verunreinigungsdiffusionswiderstands und des vierten Verunreinigungsdiffusionswiderstands zu fließen, dass
die longitudinale Richtung des zweiten Verunreinigungsdiffusionswiderstands und die longitudinale Richtung des vierten Verunreinigungsdiffusionswiderstands zueinander im Wesentlichen parallel sind und dass
zwei Enden des zweiten Verunreinigungsdiffusionswiderstands und zwei Enden des vierten Verunreinigungsdiffusionswiderstands aufeinander ausgerichtet sind und nahe beieinander liegen.

12. Messvorrichtung für eine mechanische Größe nach Anspruch 11, **dadurch gekennzeichnet, dass**
die longitudinalen Richtungen des zweiten Verunreinigungsdiffusionswiderstands und des vierten Verunreinigungsdiffusionswiderstands zu einer radialen Richtung einer Schaltung um das Zentrum in einer Oberfläche des Halbleitersubstrats (1) im Wesentlichen parallel sind.

13. Messvorrichtung für eine mechanische Größe nach Anspruch 11 oder 12, **dadurch gekennzeichnet, dass**
ein Strom dazu ausgelegt ist, in eine longitudinale Richtung jeweils des ersten Verunreinigungsdiffusionswiderstands und des dritten Verunreinigungsdiffusionswiderstands zu fließen, und dass
die longitudinale Richtung des ersten Verunreinigungsdiffusionswiderstands und die longitudinale Richtung des dritten Verunreinigungsdiffusionswiderstands zueinander im Wesentlichen parallel sind.

14. Messvorrichtung für eine mechanische Größe nach Anspruch 13, **dadurch gekennzeichnet, dass**
die longitudinalen Richtungen des ersten Verunreinigungsdiffusionswiderstands und des dritten Verunreinigungsdiffusionswiderstands im Wesentlichen unter rechten Winkeln die radiale Richtung des Kreises um das Zentrum in der Oberfläche des Halbleitersubstrats (1) kreuzen.

15. Messvorrichtung für eine mechanische Größe nach Anspruch 14, **dadurch gekennzeichnet, dass**
zwei Enden des ersten Verunreinigungsdiffusionswiderstands und zwei Enden des dritten Verunreinigungsdiffusionswiderstands aufeinander ausgerichtet sind und nahe beieinander liegen.

## Revendications

1. Dispositif de détection d'exfoliation (100) comprenant :
un substrat semi-conducteur (1) qui est adapté à être attaché à un objet extérieur (8) ;
un espace (7) dans la partie centrale (1c) du substrat semi-conducteur (1) ;
une pluralité de résistances diffusées avec des impuretés (3a, 3b, 4a, 4b) formant au moins un groupe (5) rassemblées proches les unes des autres au moins un emplacement,
la pluralité de résistances diffusées avec des impuretés (3a, 3b, 4a, 4b) formant chaque groupe étant placées sur une partie périphérique extérieure (1e) à l'extérieur de la partie centrale (1c) du substrat semi-conducteur (1) et étant connectées les unes aux autres pour former un pont de Wheatstone (2a, 2b) ;
une unité de commande (13) adaptée à acquérir les voltages de sortie d'au moins un pont de Wheatstone pour détecter une exfoliation.

2. Dispositif semi-conducteur comprenant :
le dispositif de détection d'exfoliation (100) selon la revendication 1 ; et
un élément ou un circuit (7) agencé à la partie centrale (1 c) du substrat semi-conducteur (1).

3. Dispositif de mesure de quantité mécanique comprenant :
le dispositif de détection d'exfoliation (100) selon la revendication 1 ; et
une portion de mesure (7) mesurant les contraintes sur l'objet extérieur mesuré (8), la portion de mesure (7) étant agencée à la partie centrale (1c) du substrat semi-conducteur (1), dans lequel
le substrat semi-conducteur (1) est attaché à un objet extérieur mesuré (8) pour mesurer les contraintes sur l'objet extérieur mesuré (8).

4. Module (101) comprenant :
un dispositif semi-conducteur (10) ayant un élément ou un circuit prévu sur un substrat semi-conducteur attaché à un substrat de module (12), **caractérisé en ce que** le dispositif de détection d'exfoliation (100) selon la revendication 1 est attaché à proximité du dispositif semi-conducteur (10) dans le substrat de module (12).

5. Dispositif de mesure de quantité mécanique selon la revendication 3,
**caractérisé en ce que** le substrat semi-conducteur (1) est un quadrilatère, vu dans une vue en plan, et **en ce que**
le pont de Wheatstone (2a, 2b) est formé dans au moins un des quatre coins du quadrilatère.

6. Dispositif de mesure de quantité mécanique selon la revendication 3,
**caractérisé en ce qu'**une pluralité de ponts de Wheatstone (2a, 2b) sont agencés, chacun le long d'une direction depuis une partie terminale du substrat semi-conducteur (1) vers le centre.

7. Dispositif de mesure de quantité mécanique selon la revendication 3,
**caractérisé en ce qu'**une pluralité de ponts de Wheatstone (2a, 2b) sont formés, chacun ayant une distance différente à une partie terminale du substrat semi-conducteur (1).

8. Dispositif de mesure de quantité mécanique selon la revendication 3,
**caractérisé en ce que** la pluralité de résistances diffusées avec des impuretés (3a, 3b, 4a, 4b) formant l'un des groupes (5) incluent :
une première résistance diffusée avec des impuretés,
une seconde résistance diffusée avec des impuretés dont une extrémité est connectée à une extrémité de la première résistance diffusée avec des impuretés,
une troisième résistance diffusée avec des impuretés dont une extrémité est connectée à l'autre extrémité de la seconde résistance diffusée avec des impuretés, et
une quatrième résistance diffusée avec des impuretés dont une extrémité est connectée à l'autre extrémité de la troisième résistance diffusée avec des impuretés et dont l'autre extrémité est connectée à l'autre extrémité de la première résistance diffusée avec des impuretés.

9. Dispositif de mesure de quantité mécanique selon la revendication 8,
**caractérisé en ce que** la première résistance diffusée avec des impuretés est agencée sur le côté extérieur par rapport à la seconde résistance diffusée avec des impuretés et à la quatrième résistance diffusée avec des impuretés, à l'intérieur du substrat semi-conducteur (1).

10. Dispositif de mesure de quantité mécanique selon la revendication 9,
**caractérisé en ce que** la troisième résistance diffusée avec des impuretés est agencée sur le côté extérieur par rapport à la seconde résistance diffusée avec des impuretés et à la quatrième résistance diffusée avec des impuretés, à l'intérieur du substrat semi-conducteur (1).

11. Dispositif de mesure de quantité mécanique selon la revendication 9 ou 10,
**caractérisé en ce que**
un courant est adapté à s'écouler dans une direction longitudinale de chacun de la seconde résistance diffusée avec des impuretés et de la quatrième résistance diffusée avec des impuretés,
**en ce que** la direction longitudinale de la seconde résistance diffusée avec des impuretés et la direction longitudinale de la quatrième résistance diffusée avec des impuretés sont sensiblement parallèles l'une à l'autre, et
**en ce que** deux extrémités de la seconde résistance diffusée avec des impuretés et deux extrémités de la quatrième résistance diffusée avec des impuretés sont alignées l'une avec l'autre et à proximité l'une de l'autre.

12. Dispositif de mesure de quantité mécanique selon la revendication 11,
**caractérisé en ce que** les directions longitudinales de la seconde résistance diffusée avec des impuretés et de la quatrième résistance diffusée avec des impuretés sont sensiblement parallèles à une direction radiale d'un circuit autour du centre dans une surface du substrat semi-conducteur (1).

13. Dispositif de mesure de quantité mécanique selon la revendication 11 ou 12,
**caractérisé en ce que**
un courant est adapté à s'écouler dans une direction longitudinale de chacune de la première résistance diffusée avec des impuretés et de la troisième résistance diffusée avec des impuretés, et
**en ce que** la direction longitudinale de la première résistance diffusée avec des impuretés et la direction longitudinale de la troisième résistance diffusée avec des impuretés sont sensiblement parallèles l'une à l'autre.

14. Dispositif de mesure de quantité mécanique selon la revendication 13,
**caractérisé en ce que** les directions longitudinales de la première résistance diffusée avec des impuretés et de la troisième résistance diffusée avec des impuretés recoupent, sensiblement à angle droit, la direction radiale du cercle autour du centre dans la surface du substrat semi-conducteur (1).

15. Dispositif de mesure de quantité mécanique selon la revendication 14,
**caractérisé en ce que** deux extrémités de la première résistance diffusée avec des impuretés et deux extrémités de la troisième résistance diffusée avec des impuretés sont alignées l'une avec l'autre et à proximité l'une de l'autre.
